# EUROPÄISCHE PATENTSCHRIFT

(11) **EP 0 431 111 B1**
(45) Veröffentlichungstag und Bekanntmachung des Hinweises auf die Patenterteilung: **06.10.1993**
(21) Anmeldenummer: 90908941.9
(22) Anmeldetag: 06.06.1990
(51) Int. Cl.: C12C 1/04

(54) **ANLAGE ZUR HERSTELLUNG VON MALZ AUS GETREIDE**
INSTALLATION FOR PRODUCING MALT FROM CEREALS
INSTALLATION DE PRODUCTION DE MALT A PARTIR DE CEREALES

(30) Priorität: 06.06.1989 DE 3918438
(43) Veröffentlichungstag der Anmeldung: 12.06.1991
(73) Patentinhaber: SEEGER GMBH, 73655 Plüderhausen (DE)
(72) Erfinder: FREI, Willi, CH-9016 St. Gallen (CH)
(74) Vertreter: Füchsle, Klaus, Dipl.-Ing.
(86) Internationale Anmeldenummer: EP9000893
(87) Internationale Veröffentlichungsnummer: WO9015131

(56) Entgegenhaltungen:
- None

## Beschreibung

Die Erfindung bezieht sich auf eine Vorrichtung zur Herstellung von Malz für die Bierbrauerei.

Unter der Malzbereitung versteht man das Keimen von Getreidearten bei kontrollierten Betriebszuständen. Dieser Vorgang kann in bezug auf die erforderlichen Schritte sowie Bearbeitungsanlagen in das Weichen des Getreides, das Keimen des geweichten Gutes zu Grünmalz und das abschließende Trocknen und Darren zu Braumalz aufgeteilt werden.

In der klassischen Mälzerei werden die drei Bearbeitungsbereiche Weichen, Keimen und Darren in getrennten, eigens dafür konzipierten Anlagen durchgeführt. Die Bearbeitungszeiten variieren je nach Getreideart und erforderlicher Produktqualität; normalerweise können aber für das Weichen 1 bis 2 Tage, für das Keimen 4 bis 6 Tage und für das Darren 1 bis 2 Tage veranschlagt werden. Das Weichen erfolgt in wasserdichten Behältern, während für das Keimen und Darren luftdurchlässige Hordenkonstruktionen eingesetzt werden.

Bei einem durchgehenden Mälzungsbetrieb wird jeden Tag eine Charge Getreide der Verarbeitung zugeführt. Bei 2-tägiger Weichung, 5-tägiger Keimung und 2-tägiger Darrung müssen demzufolge 2 Weichgefäße, 5 Keimhorden und 2 Darrhorden vorhanden sein. In der herkömmlichen Betriebsweise wird das Getreide nach 2 Tagen Weichzeit in die Keimkästen umgeladen und nach 5 Tagen Keimdauer wiederum auf die Darrhorde überführt. Es sind aber auch Verfahren bekannt, wonach die Chargen täglich von einer Behandlungszone zur nächsten umgeladen, im Extremfall sogar kontinuierlich von einer Zone zur nächsten gefördert werden.

Das Umladen des Keimgutes bedingt maschinelle Einrichtungen und erfordert einen gewissen Bedienungs- und Zeitaufwand, so daß das Bestreben naheliegt, einzelne Bearbeitungsbereiche zusammenzulegen oder Anlagen zu entwickeln, bei denen der Transport des Keimgutes ohne personellen Aufwand und in kurzer Zeit erfolgen kann.

Eine Anlage dieser Art ist in der OS 2 551 624 beschrieben. Die Aufgabe besteht hier darin, das Keimen und Darren in einer Anlage aus übereinander angeordneten Horden durchzuführen, wobei vor allem das platzsparende Anordnen der Anlage hervorgehoben wird. Täglich wird das Keimgut mittels automatisch arbeitenden Förderelementen von einer Behandlungszone zur darunterliegenden umgeladen. Dieser Vorgang kann zwar ohne personelle Betreuung durchgeführt werden; es sind aber in jeder Zone aufwendige mechanische Einrichtungen notwendig.

Mit der PS 21 21 586 wurde eine keim-Darranlage veröffentlicht, die ebenfalls aus mehreren übereinander angeordneten Horden besteht. Die Aufgabe des Keimens mit anschließendem

Darren wird bei dieser Anlage derart gelöst, daß die Getreidecharge über den gesamten Bearbeitungszeitraum in der gleichen Horde verbleibt und daß das Umschalten von Keimauf den Darrbetrieb durch das Betätigen von Luftklappen erfolgt. Zur Vermeidung von Verwurzelungen des Getreides während des Keimens sind in jeder Horde Wender vorgesehen, die während des Keimens in regelmäßigen Abständen das Grünmalz auflockern.

Der Vorteil dieser Vorrichtung besteht darin, daß kein Umladen des Grünmalzes erforderlich ist. Allerdings hat sich in der Praxis herausgestellt, daß durch den wechselseitigen Betrieb, d. h. 5 Tage Keimen bei Temperaturen um 15 °C und anschließendem Darren während 1 bis 2 Tagen bei Temperaturen zwischen 30 und 80 °C, vor allem die Einrichtungen über der Horde enormen Belastungen bezüglich Korrosion ausgesetzt sind. Zudem muß beim Darrbeginn die Gebäudestruktur der betroffenen Horde von vorher 15 °C auf 80 °C hochgeheizt und beim anschließenden Keimbeginn wieder auf 15 °C heruntergekühlt werden, so daß bei dieser Betriebsweise hohe Energieverluste auftreten.

Eine weitere Anlage für den kombinierten Keim-Darrbetrieb, die die Merkmale des Oberbegriffs des Anspruches 1 aufweist, ist in der US-PS 26 76 140 dargestellt. Danach wird eine ringförmige, kontinuierlich drehende Horde über mehrere Bearbeitungszonen bewegt. Der größere Teil der Bearbeitungszonen wird zum Keimen, der kleinere Teil zum Darren des Grünmalzes verwendet. Zwar wird bei dieser Idee das Grünmalz wiederum von einer Zone zur anderen bewegt; es erfolgt aber für alle Zonen mit einer einzigen Vorrichtung, und zwar durch langsames, kontinuierliches Drehen der Horde. Auch sind die Kräfte für das Drehen relativ gering, da sich der Zeitraum für eine komplette Umdrehung der Horde über 5 bis 7 Tage erstreckt. Ein Nachteil der aus dieser Druckschrift bekannten Vorrichtung besteht darin, daß zwar oberhalb und unterhalb der Horde je eine Trennvorrichtung vorgesehen sind, diese jedoch nicht in zufriedenstellender Weise eine Abdichtung der einzelnen Zonen ermöglichen. Die obere Trenneinrichtung ist in Form eines Flügelrades ausgebildet, welches mit seinen Flügeln teilweise in dem Korngut läuft. Abgesehen von den Problemen hinsichtlich der unterschiedlichen Geschwindigkeiten am radialinneren und radialäußeren Bereich der Horde erweist sich diese Art der Abdichtung als unzuverlässig, da die Schichthöhe des Korngutes die Abdichtwirkung beeinflußt und somit geringfügige Höhenunterschiede der Schicht eine Abdichtung verhindern. Weiterhin können unbeladene Bereiche der Horde nicht abgedichtet werden. Es ist deshalb zum Beispiel nicht möglich, einen Wechsel unterschiedlichen Korngutes, beispielsweise von Weisen zu Gerste vorzunehmen. Die untere Trennvorrichtung weist einen Abstand zum Hordenboden auf, so daß eine Abdichtung der einzelnen Zonen ausscheidet. Nachteilig ist ferner, daß durch die Druck- und Temperaturunterschiede zwischen der zugeführten Keimluft und der Darluft Strömungsverhältnisse auftreten, welche ein Darren erschweren oder sogar unmöglich machen können. Dabei ist nämlich zu berücksichtigen, daß beim Darren rund der zehnfache Luftbedarf wie beim Keimen besteht, d. h., der Luftdruck unter der Darrhorde üblicherweise mindestens zehn mal höher ist, als der Druck unter der Keimhorde. Infolge dieses großen Druckunterschiedes würde die heiße Darrluft durch den Hohlraum in die Keimsektion entweichen, wodurch auch das Keimen verhindert oder in ungewünschter Weise erschwert würde.

Ein weiterer Nachteil dieser aus der US-PS 26 76 140 bekannten Vorrichtung besteht darin, daß diese in einem kontinuierlichen Betrieb arbeitet, sich die Horde somit in einer ständigen Drehbewegung befindet. Da das Eintauchen des Flü- gelrades an der Oberfläche des Korngutes zur Ausbildung wellenartiger Oberflächenstrukturen führt, weist die Korngutschicht somit unterschiedliche Dicken auf. In der Praxis hat sich herausgestellt, daß bei dieser Schichtausbildung nur der Malzbereich unter den Tälern beim Darren trocken wird, während die erhöhten Bereiche feucht bleiben. Es ist somit nicht nöglich, im kontinuierlichen Betrieb Braumalz herzustellen, welches im Endfeuchtegehalt die engen erforderlichen Toleranzen erfüllt. Nachteilig ist schließlich, daß, bedingt durch die kontinuierliche Arbeitsweise, keine Unterteilungen der Horde möglich sind, da die in das Korngut einzubringenden Geräte, beispielsweise zum Umwälzen und ähnlichem, mit den Trennwänden in Zusammenwirkung kommen könnten.

Die DE-AS 12 74 548 zeigt eine kontinuierlich arbeitende Mälzereianlage mit den Merkmalen des Oberbegriffs des An spruches 1, bei welcher eine einen offenen Ring bildende Horde vorgesehen ist, welche takweise bewegt wird. Auch bei bei dieser Anordnung ist keine Abtrennung der einzelnen Lufträume der Zonen möglich, da hier ebenfalls die Schichthöhen der Korngutschicht die Abdichtung beeinflussen. Ein weiterer Nachteil dieser Vorrichtung besteht darin, daß die einzelnen Horden über Kupplungselemente miteinander verbunden werden müssen, wodurch sich beim praktischen Betrieb Dichtungsprobleme ergeben. Nachteilig ist bei dieser Vorrichtung ferner darin, daß ein Wechsel zwischen unterschiedlichem Korngut nicht möglich ist, da leere Bereiche der Horde nicht gegeneinander abgedichtet werden können.

Es ist somit festzustellen, daß dem praktischen Einsatz dieses Systems die Problematik der lufttechnischen Trennung der einzelnen Behandlungszonen entgegengewirkt. Vor allem im Trennbereich zwischen Keimen und Darren ist eine Abdichtung des Raumes unter der Horde, dann der Grünmalzschicht selber und des Raumes über der Malzschicht von entscheidender Bedeutung. Da beim Keinen und Darren mit unterschiedlichen Luftmengen gearbeitet wird, entstehen im Trennbereich Keimen/Darren in der Malzschicht große Druckunterschiede. Nachdem bei der kontinuierlichen Fahrweise keine Trennwände in der Malzschicht angeordnet werden können, stößt eine praxisorientierte Lösung dieser Dichtungsaufgabe auf große Schwierigkeiten.

Der Erfindung liegt die Aufgabe zugrunde, eine Anlage der eingangs genannten Art zu schaffen, welche bei einfachem Aufbau und betriebssicherer Wirkungsweise das Keimen und Darren in einer einzigen Vorrichtung ermöglicht und dabei die Nachteile des Standes der Technik vermeidet.

Die Aufgabe wird erfindungsgemäß durch die Merkmalskombination des Hauptanspruchs gelöst.

Die erfinderische Lösung besteht darin, das Keimen und Darren in einer einzigen Anlage, unter Behebung der geschilderten Nachteile, durchzuführen. Dies wird durch eine kreisförmige Vorrichtung gelöst, die einen Druckraum unter der Horde, eine ringförmige, drehbare Horde mit fest eingebauten Trennwänden und einen Raum über der Horde enthält. Im Zentrum der kreisförmigen Vorrichtung ist ein runder Kern für die Bedienung und Versorgung vorgesehen, der sich über die gesamte Höhe der Vorrichtung erstreckt.

Der Druckraum unter der Horde ist in mehrere, formgleiche Zonen aufgeteilt, wobei jede Zone durch ortsfeste Trennwände von der anderen abgetrennt ist. Die Trennwände reichen bis an die Unterkante der Hordenkonstruktion und weisen zur Horde hin eine Dichtungseinrichtung auf. Je nach Anzahl der Keim- und Darrtage ist der ringförmige Druckraum in üblicherweise 5 bis 8 Zonen, vorzugsweise 7 Zonen aufgeteilt. 4 bis 6, vorzugsweise 5 Zonen sind zum Keimen vorgesehen und weisen ortsfeste, unabhängige Keimluft-Versorgungsanlagen auf. 1 bis 2, vorzugsweise 2 Zonen sind für das Darren bestimmt; ihnen sind ortsfeste, unabhängige Darrluft-Versorgungsanlagen zugeordnet.

Über dem Druckraum ist die ringförmige, drehbare Horde angeordnet, die mit der Horde fest verbundene Trennwände aufweist. Diese Trennwände reichen in der Höhe etwas über die Grünmalzschicht und sind auf der Horde derart angeordnet, daß sie mit den Trennwänden in dem darunter liegenden Druckraum in Deckung bringbar sind. Durch diese Anordnung und die formgleiche Ausbildung der Zonen wird nun erreicht, daß sich nach dem Drehen der Horde um jeweils eine Zone die mit der Horde verbundenen Trennwände wieder mit den Trennwänden des Druckraumes decken.

Der Raum über der Horde weist nur noch Trennwände in den Darrzonen auf. Diese Trennwände sind mit der Decke ortsfest verbunden, reichen bis in die Höhe der Trennwände der Horde und weisen Dichtungselemente zu den Hordentrennwänden auf. Sie fluchten mit den entsprechenden Trennwänden des Druckraumes und gelangen in Deckung mit den entsprechenden Trennwänden der Horde bei entsprechender Stellung derselben. Durch diese Anordnung der Trennwände ist die Voraussetzung für eine einwandfreie Trennung zwischen den Darr- und Keimzonen gegeben.

Der Raum über der Horde in den Keimzonen weist keine Trennwände auf, da eine Trennung der Abluftströme nach den verschiedenen Keimzonen technologisch nicht erforderlich ist. Dadurch ist es möglich, eine einzige Wendeeinrichtung einzusetzen die an Schienen beweglich von einer Keimzone zur anderen gefahren werden kann. Der Wendereinsatz kann somit individuell für jede Zone entsprechend der Grünmalzbeschaffenheit gewählt werden.

Die Anlage wird nun chargenweise, d. h. einmal täglich mit dem Weichgut beladen, und zwar immer in der Zone 1. In dieser Zone beginnt das Keimen des Getreides unter kontrollierten Bedingungen mit konditionierter Luft. Nach Ablauf eines Tages wird durch Drehen der Horde um eine Zone das Keimgut von Zone 1 zur Zone 2 gebracht, so daß die Zone 1 wieder eine neue Charge Weichgut aufnehmen kann. Der Hordenantrieb ist derart ausgelegt, daß der Zonenwechsel in weniger als 1 Stunde durchgeführt werden kann.

Bei diesem chargenweisen Betrieb sind nach 5 Tagen sämtliche Keimzonen mit Grünmalz belegt, und zu Beginn des 6. Tages wird beim Drehen der Horde das Grünmalz aus der Zone 5 zum Darren in die Zone 6 gebracht. Da sich die Trennwände beim Drehen der Horde nicht überdecken und ein lufttechnisches Trennen der Zonen temporär nicht möglich ist, bleiben die Darrventilatoren während des Hordendrehvorganges außer Betrieb. Nach einem weiteren Tag mit 5 Zonen beim Keimen und einer Zone beim Darren (Schwelken) wird die Horde wieder um eine Zone gedreht, so daß das geschwelkte Malz aus der Zone 6 in die Zone 7 zum Abdarren und alle anderen Chargen ebenfalls in die nächste Behandlungszone gebracht werden. Demzufolge sind am 7. Tage alle Zonen belegt, wobei im Laufe dieses Tages der Abdarrvorgang in Zone 7 abgeschlossen, das Darrmalz gekühlt und anschließend mit einer geeigneten Vorrichtung, z. B. mit einer Ausraümschnecke, ausgeräumt wird. Somit bewegt sich am 8. Tag eine leere Hordenzone von Zone 7 zu Zone 1 und kann dort wieder mit frischem Weichgut beladen werden.

Eine Vorrichtung gemäß dieser Erfindung ist einfach im Aufbau, benötigt nur eine Wendevorrichtung für das Grünmalz in den Keimzonen, kann zonenweise während des Betriebes lufttechnisch, wo erforderlich, einwandfrei abgetrennt werden, und durch das räumliche Trennen der Keim- und Darrzonen sind ideale Voraussetzungen für einen energiesparenden Betrieb gegeben.

Es ist somit festzustellen, daß die erfindungsgemäße Drehhorde festinstallierte Trennwände aufweist, welche eine einwandfreie Unterteilung der Grünmalzchargen sicherstellen und eine Vermischung des Malzgutes verhindern. Dies ist insbesondere wichtig, da in vielen Mälzereien oft in kurzen Intervallen Weizen- und Gerstenmalzchargen abwechseln.

Erfindungsgemäß bilden die Trennwände in der Drehhorde zusammen mit den ortsfesten Trennwänden des Gebäudes eine exakte Abdichtung der unterschiedlichen Luftströme, so daß eine Vermischung der Prozessluft verhindert wird. Weiterhin ist es möglich, mittels der erfindungsgemäßen Trennwände und der an diesen vorgesehenen Dichtungen eine Wärmeisolation zu gewährleisten, so daß die unterschiedlichen Prozesstemperaturen in den einzelenen Zonen aufrechterhalten werden können.

Da erfindungsgemäß die Drehung der Drehhorde in relativ kurzer Zeit vorgenommen werden kann, beeinträchtigt diese kurze Drehphase nicht oder nur in zu vernachlässigender Weise den gesamten Verarbeitungsvorgang.

Im folgenden wird die Erfindung anhand eines Ausführungsbeispiels in Verbindung mit der Zeichnung beschrieben. Dabei zeigt:
- Fig. 1: Eine Draufsicht auf die erfindungsgemäße Anlage im Bereich unterhalb der Drehhorde,
- Fig. 2: eine Draufsicht Draufsicht auf die Drehhorde,
- Fig. 3: eine Draufsicht auf die erfindungsgemäße Anlage im Bereich oberhalb der Drehhorde,
- Fig. 4: eine Schnittansicht entlang der Linie IV - IV von Fig. 1 und
- Fig. 5: eine Schnittansicht entlang der Linie V - V von Fig. 1.

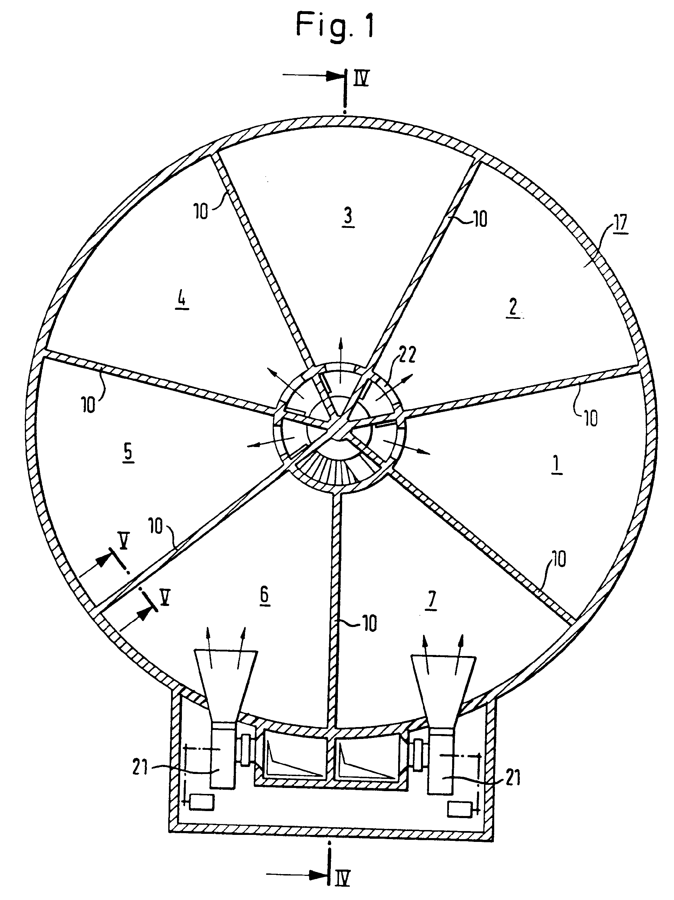

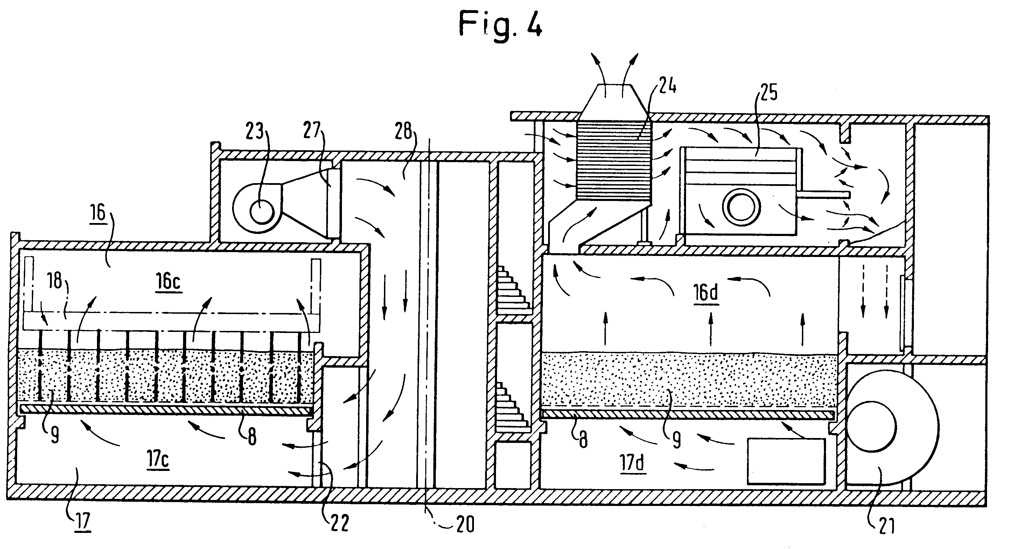

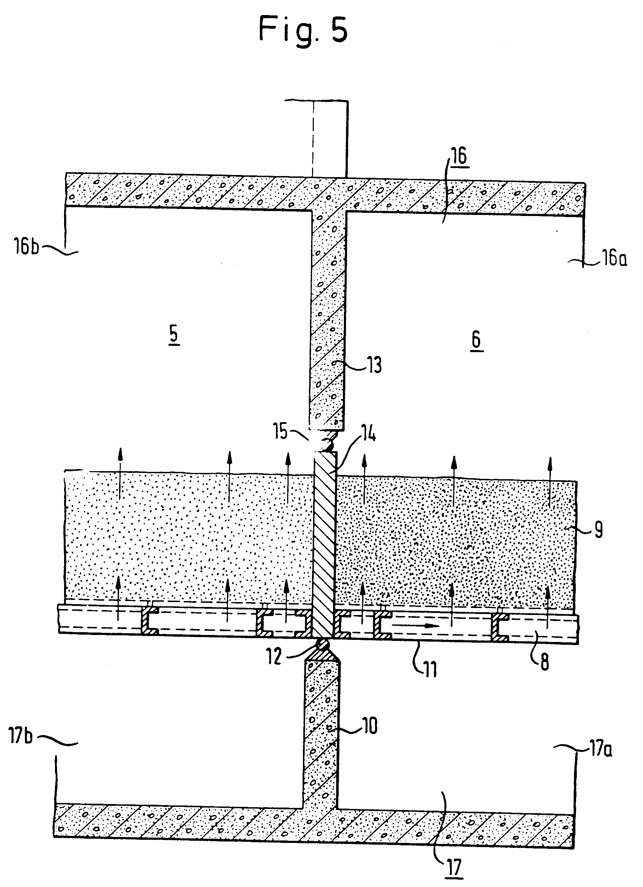

Die in den Fig. 1 bis 5 dargestellte erfindungsgemäße Anlage umfaßt ein im Einzelnen nicht beziffertes Gebäude, in welchem eine kreisringförmige Drehhorde 8 gelagert ist. Diese ist um eine in Fig. 4 nur angedeutete Mittelachse 20 drehbar. Zur Vereinfachung der Darstellung wurde in den Figuren darauf verzichtet, den Antrieb der Drehhorde im einzelnen abzubilden. Die Drehhorde ist luftdurchlässig ausgebildet, so daß das auf ihr abgelegte korngut vom Boden 11 der Drehhorde 8 aus mit Prozeßluft durchströmt werden kann, sowie dies in den Fig. 4 und 5 dargestellt ist.

Erfindungsgemäß weist die Drehhorde mehrere sich in radialer Richtung erstreckende, fest installierte Trennwände 14 auf, durch welche die Drehhorde in sieben Zonen unterteilt ist, nämlich in Keimzonen 1 bis 5, eine Schwelkzone 6 und eine Abdarrzone 7. Die einzelnen Zonen 1 bis 7 weisen jeweils die gleiche Grundfläche auf, so daß die Drehhorde 8 in einzelne kreissektorförmige Zonen unterteilt ist.

Der unterhalb der Drehhorde 3 angeordnete untere Raum 17 ist mit Trennwänden 10 versehen, welche so angeordnet sind, daß dieser gesamte untere Raum 17 ebenfalls in sieben Zonen unterteilt ist, welche gleich sind zu den Zonen der Drehhorde. Oberhalb der jeweiligen Trennwand 10 ist eine sich ebenso wie die Trennwand 10 in radialer Richtung erstreckende Abdichtung 12 vorgesehen, so daß der untere Raum 17 durch jeweilis zwei Trennwände 10 und die zugehörigen Abdichtungen 12, wie in Fig. 5 gezeigt, in einzelne untere Räume 17a und 17b unterteilbar ist.

Oberhalb der Drehhorde 8 ist ein oberer Raum 16 vorgesehen, in welchem sich ebenfalls radial angeordnete Trennwände 13 erstrecken, an deren Unterseite jeweils eine Abdichtung 15 vorgesehen ist. Wie in Fig. 5 dargestellt, ermöglichen die Trennwände 13 mit den zugehörigen Abdichtungen 15 im Zusammenwirken mit der jeweiligen Trennwand 14 der Drehhorde 8 ebenfalls eine Abdichtung der einzelnen Zonen 16a, 16b des oberen Raums 16.

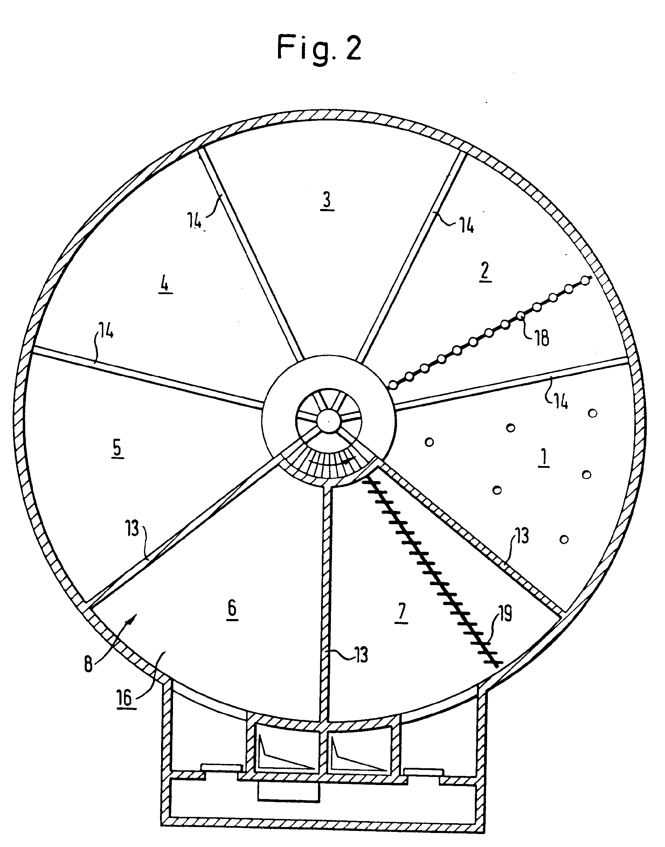

Im Gegensatz zu der Aufteilung des unteren Raums 17 und der Drehhorde 8 in sieben gleichgroße Zonen 1 bis 7 sind im oberen Raum 16 lediglich drei Trennwände 13 vorgesehen, so daß im oberen Raum insgesamt drei Bereiche ausgebildet sind, nämlich zwei Bereiche, welche in ihrer Größe der jeweiligen Zone der Drehhorde 8 entsprechen, sowie ein Bereich, welcher die Fläche von fünf Zonen der Drehhorde abdeckt. Diese Ausgestaltung ermöglicht es, in den Zonen 1 bis 5 (gem. der in den Fig. 1 und 2 dargestellten Zonenaufteilung) eine Wendevorrichtung 18 vorzusehen, welche auf einem Gleis verfahrbar angeordnet sein kann, um das Korngut in den jeweiligen Zonen umzuwenden.

Wie in den Fig. 1 und 4 gezeigt, ist am unteren Bereich der Anlage ein Darrventilator installiert, um jede der beiden (gem. der in den Fig. gewählten Nummerierung der Zonen) Zonen 6 und 7 jeweils unabhängig mit Darrluft zu versorgen. Weiterhin sind im Zentrum der Anlage, in welchem auch Service und Bedienungswege vorgesehen sind, Belüftungen 22 und Kühlungen vorgesehen, um die Zonen 1 bis 5 zu belüften und zu kühlen. Zur Versorgung dieser Belüftung 22 dient eine unabhängige Luftaufbereitungsanlage 23. Weiterhin ist im dem Gebäude im Abluftbereich der Zonen ein Warmetauscher 24 vorhanden (Fig. 4), welchem sich ein Lufterhitzer 25 anschließt, um die einströmende Luft entsprechend vorzuwärmen. Wie in Fig. 2 dargestellt, kann insbesondere in der Zone 7 eine Abräumvorrichtung zum Abtransport des Korngutes 9 vorgesehen sein.

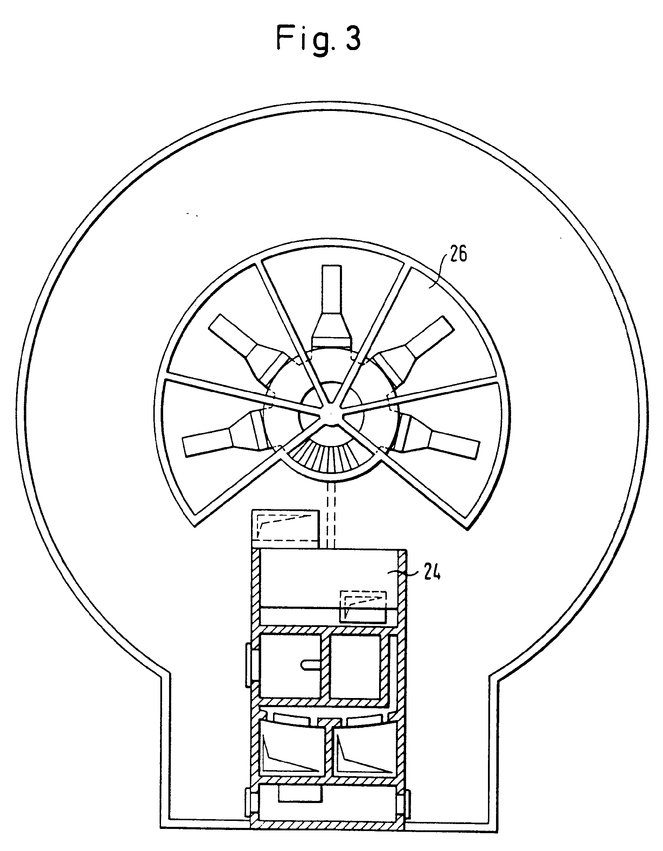

In Fig. 3 ist eine Draufsicht auf die erfindungsgemäße Anlage dargestellt, aus welcher sich insbesondere die Lage und Anordnung des Wärmetauschers 24 sowie der Keimzonenbelüftung 26 ergeben.

Aus der in Fig. 4 gezeigten Darstellung ist der Strömungsweg der Kkeimluft-Versorgung 28 besonders deutlich ersichtlich, welche durch den Ventilator 23 sowie einen Kühler 27 in den unteren Raum 17c geführt wird. Der auf der in Figur rechten Seite dargestellte Raum 17d bildet einen Druckraum, in welchen die von dem Darrventilator 21 geförderte Luft eingebracht wird.

Der aus Fig. 5 ersichtliche Querschnitt zeigt in der linken Seite die Keimzone 5, während an der rechten Seite die Darrzone 6 angrenzt. Es befindet sich deshalb in der Keimzone 5 Grünmalz, während in der Darrzone 6 Schwelkmalz angeordnet ist.

Hinsichtlich der Beschreibung des Betriebs der Anlage wird auf die eingangs gemachten Ausführungen verwiesen, welche insbesondere die Beladung der Zonen 1 bis 7 und deren zeitliche Zuordnung beschrieben.

Die Erfindung ist nicht auf das gezeigte Ausfuhrungsbeispiel beschränkt; für den Fachmann ergeben sich vielmehr im Rahmen der Erfindung vielfältige Abwandlungsmöglichkeiten, insbesondere hinsichtlich der Zahl der Zonen und deren Formgebung.

## Patentansprüche

1. Anlage zur Herstellung von Malz aus Getreide, umfassend
- eine Drehhorde (8), die
- das Korngut (9) , aufgeteilt in Zonen für das Keimen, Schwelken und Abdarren, für den gesamten Arbeitszyklus aufnimmt
- und zur Durchführung dieses gesamten Arbeitszyklus um 360° gedreht wird,
- einen Raum (17) unterhalb der Drehhorde (8), der
- im wesentlichen kreisringförmig ausgebildet ist,
- koaxial zur Drehhorde (8) liegt
- und durch im wesentlichen radial verlaufende und ortsfeste Trennwände (10) in lufttechnisch voneinander getrennte Zuführräume für die separate Zuführung von Keimluft, Schwelkluft und Darrluft zur Drehhorde (8) aufgeteilt ist, wozu
- die Trennwände (10) in bezug auf den Boden (11) der Drehhorde (8) mit mit diesem zusammenwirkenden Abdichtungen (12) versehen sind,
- einen oberhalb der Drehhorde (8) angeordneten Raum (16), der
- ebenfalls im wesentlichen kreisringförmig ausgebildet ist,
- koaxial zur Drehorde (8) liegt,
- und durch im wesentlichen radial verlaufende und ortsfeste Trennwände (13) in lufttechnisch voneinander getrennte Abführräume für die separate Abführung der durch das Korngut (9) auf der Drehhorde hindurchgetretenen Keim-, Schwelk- und Darrluft aufgeteilt ist, sowie
- Trennanordnungen, die
-mit der Drehhorde (8) sowie den Trennwänden (10, 13) des oberen Raums derart Zusammenwirken, daß beim Drehen der Drehhorde (8), durch die das Korngut (9) nacheinanderfolgend in den Weg der Keimluft, der Abdarrluft und der Schwelkluft gebracht wird, die durch das Korngut (9) hindurchgetretene Keim-, Schwelk und Darrluft separat in die entsprechenden Abführräume in dem oberen Raum (16) abgeleitet werden,
dadurch **gekennzeichnet,** daß
- die Drehhorde (8) mit radial verlaufenden, ortsfesten Trennwänden (14) für deren Aufteilung in Keimzonen (1-5), eine Schwelkzone (6) und eine Abdarrzone (7) versehen ist,
- den Trennwänden (14) der Drehhorde (8) und/oder den Trennwänden (13) des oberen Raumes (16) Abdichtungen (15) zugeordnet sind, und
- die Drehhorde (8) taktweise so bewegt wird, daß die Trennwände (14) der Drehhorde (8) sowohl mit den Trennwänden (10) des unteren Raums (17) als auch mit denen (13) des oberen Raums (16) derart fluchten und aufgrund der Abdichtungen (12. 15) so zusammenwirken, daß die jeweiligen Zuführräume des unteren Raums (17) die Zonen (1-7) der Drehhorde (8) und die Abführräume des oberen Raums (16) voneinander lufttechnisch getrennte Kanäle für die separate Führung der Keimluft, der Schwelkluft und der Darrluft durch die Anlage bilden.

2. Anlage nach Anspruch 1,
dadurch **gekennzeichnet,** daß
- die Anlage sieben Zonen (1-7) umfaßt.

3. Anlage nach Anspruch 1 oder 2,
dadurch **gekennzeichnet,** daß
- die Zonen (1 bis 7) jeweils gleichförmig ausgebildet sind.

4. Anlage nach einem der Ansprüche 1 bis 3,
dadurch **gekennzeichnet,** daß
- der untere Raum (17) durch sieben Trennwände (10) in die Zonen (1 bis 7) unterteilt wird.

5. Anlage nach einem der Ansprüche 1 bis 4,
dadurch **gekennzeichnet,** daß
- die Drehhorde (8) durch sieben Trennwände (14) in die Zonen (1 bis 7) unterteilt wird.

6. Anlage nach einem der Ansprüche 1 bis 5,
dadurch **gekennzeichnet,** daß
- der obere Raum (16) durch drei Trennwände (13) in zwei Zonen gleicher Größe wie jede der Zonen der Drehhorde (8) und in eine fünf der Zonen der Drehhorde (8) abdeckende Zone aufgeteilt ist.

7. Anlage nach Anspruch 6,
dadurch **gekennzeichnet,** daß
- die zwei Zonen gleicher Größe die Schwelkzone (6) und die Abdarrzone (7) bilden.

8. Anlage nach einem der Ansprüche 1 bis 7,
dadurch **gekenneichnet,** daß
- zumindest in die Keimzonen (1 bis 5) eine Wendevorrichtung (18) einsetzbar ist.

9. Anlage nach einem der Ansprüche 1 bis 8,
dadurch **gekennzeichnet,** daß
-die Abdarrzone (7) mit einer Entleerungsvorrichtung (19) versehen ist.

10. Anlage nach einem der Ansprüche 1 bis 9,
dadurch **gekennzeichnet,** daß
- die Drehhorde (8) mittels eines Antriebs in weniger als einer Stunde um den Bereich einer Zone (1 bis 7) drehbar ist.

## Claims

1. Installation for producing malt from cereals comprising
- a rotary kiln floor (8) which
- receives the grain (9) for the entire working cycle divided into zones for germinating, air-drying and kiln-drying
- and is rotated by 360° to carry out this entire working cycle,
- a chamber (17) below the rotary kiln floor (8) which
- has a substantially circular shape,
- is coaxial with respect to the rotary kiln floor (8)
- and is divided into supply chambers, which are separated from one another with regard to ventilation, for the separate supply of germination air, air-drying air and kiln-drying air to the rotary kiln floor (8), by means of substantially radially extending and fixed separating walls (10), for which purpose
- the separating walls (10) are provided with seals (12) cooperating with the rotary kiln floor (8) in respect of the base (11) of the latter,
- a chamber (16) arranged above the rotary kiln floor (8) which
- also has a substantially circular shape,
- is coaxial to the rotary kiln floor (8),
- and is divided into outlet chambers, which are separate from one another with regard to ventilation for the separate removal of the germination air, air-drying air and kiln-drying air which have passed through the grain (9) on the rotary kiln floor, by means of substantially radially extending and fixed separating walls (13), and
- separating arrangements which
- cooperate with the rotary kiln floor (8) and the separating walls (10, 13) of the upper chamber, such that when the rotary kiln floor (8) is rotated, which brings the grain (9) in sequence in the path of the germination air, the kiln-drying air and the air-drying air, the germination air, air-drying air and kiln-drying air which have passed through the grain (9) are diverted separately into the appropriate removal chambers in the upper chamber (16),
characterised in that
- the rotary kiln floor (8) is provided with radially extending, fixed separating walls (10) for its division into germinating zones (1-5), an air-drying zone (6) and a kiln-drying zone (7),
- seals (15) are assigned to the separating walls (14) of the rotary kiln floor (8) and/or the separating walls (13) of the upper chamber (16), and
- the rotary kiln floor (8) is moved cyclically, so that the separating walls (14) of the rotary kiln floor (8) are aligned both with the separating walls (10) of the lower chamber (17) as well as with those (13) of the upper chamber (16) and cooperate because of the seals (12, 15), such that the particular supply chambers of the lower chamber (17), the zones (1-7) of the rotary kiln floor (8) and the outlet chambers of the upper chamber (16) form channels, which are separate from one another with regard to ventilation for the separate supply of germination air, air-drying air and kiln-drying air through the installation.

2. Installation according to claim 1, characterised in that
- the installation comprises seven zones (1-7).

3. Installation according to claim 1 or 2, characterised in that
- the zones (1 to 7) are designed to be equal in each case.

4. Installation according to one of claims 1 to 3, characterised in that
- the lower chamber (17) is divided into the zones (1 to 7) by means of seven separating walls (10).

5. Installation according to one of claims 1 to 4, characterised in that
- the rotary kiln floor (8) is divided into the zones (1 to 7) by means of seven separating walls (14).

6. Installation according to one of claims 1 to 5, characterised in that
- the upper chamber (16) is divided into two zones of equal size, like each of the zones of the rotary kiln floor (8), and into a zone covering five of the zones of the rotary kiln floor (8) by means of three separating walls (13).

7. Installation according to claim 6, characterised in that
- the two zones of equal size form the air-drying zone (6) and the kiln-drying zone (7).

8. Installation according to one of claims 1 to 7, characterised in that
- a turner (18) can be inserted at least in the germinating zones (1 to 5).

9. Installation according to one of claims 1 to 8, characterised in that
- the kiln-drying zone (7) is provided with an emptying device (19).

10. Installation according to one of claims 1 to 9, characterised in that
- the rotary kiln floor (8) can be rotated around the region of one zone (1 to 7) by means of a drive in less than one hour.

## Revendications

1. Installation de fabrication de malt à partir de céréales, comprenant :
- un plateau de touraille rotatif (8), qui
- reçoit le produit en grains (9) pour l'ensemble du cycle de travail, subdivisé en zones pour la germination, le séchage à l'air et le coup de feu,
- et effectue une rotation de 360° pour effectuer ce cycle de travail complet,
- une enceinte (17) située au-dessous du plateau de touraille rotatif (8),
- réalisée sensiblement en forme d'anneau de cercle,
- coaxiale par rapport au plateau de touraille rotatif (8)
- et subdivisée, au moyen de parois de séparation (10), s'étendant sensiblement radialement et fixes, en enceintes d'amenée, séparées les unes des autres en ce qui concerne leur gestion d'alimentation en air, pour amener séparément de l'air de germination, de l'air de séchage et de l'air de coup de feu au plateau de touraille rotatif (8),
- ce pourquoi les parois de séparation (10) sont pourvues de joints d'étanchéité (12), agissant par rapport au fond (11) du plateau de touraille rotatif (8) et coopérant avec celui-ci,
- une enceinte (16), disposée au-dessus du plateau de touraille rotatif (8), qui
- est également réalisée sensiblement sous forme d'anneaux de cercle,
- est coaxiale par rapport au plateau de touraille rotatif (8),
- et est subdivisée, au moyen de parois de séparation (13), s'étendant sensiblement radialement et fixes, en enceintes d'évacuation, séparées les unes des autres en ce qui concerne leur gestion en air, pour évacuer séparément l'air de germination, l'air de séchage et l'air de coup de feu étant passé à travers le produit en grain (9) situé sur le plateau de touraille rotatif, ainsi que
- des dispositifs de séparation, qui
- coopérent avec le plateau de touraille rotatif (8), ainsi qu'avec les parois de séparation (10,13) de l'enceinte supérieure, de telle façon que lors de la rotation du plateau de touraille rotatif (8), au moyen de laquelle le produit en grains (9) est successivement placé dans le trajet de l'air de germination, de l'air de coup de feu et de l'air de séchage, l'air de germination, de séchage et de coup de feu étant passé à travers le produit en grains (9) soit dévié séparément dans les enceintes d'évacuation correspondantes situées dans l'enceinte supérieure (16),
caractérisée en ce que
- le plateau de touraille rotatif (8) est pourvu de parois de séparation (14) s'étendant radialement et fixes pour assurer sa subdivision en zones de germination (1 à 5), une zone de séchage (6) et une zone de coup de feu (7),
- des joints d'étanchéité (15) sont associés aux parois de séparation (14) du plateau de touraille rotatif (8) et/ou aux paroi de séparation (13) de l'enceinte supérieure (16), et
- le plateau de touraille rotatif (8) étant entraînée de façon cadencée, de telle façon que les parois de séparation (14) du plateau de touraille rotatif (8) soient alignées tant par rapport aux parois de séparation (10) de l'enceinte inférieure (17), qu'également avec celles (13) de l'enceinte supérieure (16), de telle façon et en coopérant, du fait des joints d'étanchéité (12,13) de telle façon que les enceintes d'amenée respectives de l'enceinte inférieure (17), les zones (1 à 7) du plateau de touraille rotatif (8) et les enceintes d'évacuation de l'enceinte supérieure (16) forment des canaux, séparés les uns des autres en ce qui concerne leur gestion en air, pour l'amenée séparée de l'air de germination, de l'air de séchage et de l'air de coup de feu dans l'installation.

2. Installation selon la revendication 1, caractérisée en ce que
- l'installation comprend sept zones (1 à 7).

3. Installation selon la revendication 1 ou 2, caractérisée en ce que
- les zones (1 à 7) sont chaque fois réalisées suivant la même forme.

4. Installation selon l'une des revendications 1 à 3, caractérisée en ce que
- l'enceinte inférieure (17) est subdivisée en les zones (1 à 7) au moyen de sept parois de séparation (10).

5. Installation selon l'une des revendications 1 à 4, caractérisée en ce que
- le plateau de touraille rotatif (8) est subdivisé en les zones (1 à 7) au moyen de sept parois de séparation (14).

6. Installation selon l'une des revendications 1 à 5, caractérisée en ce que
- l'enceinte supérieure (16) est subdivisée, au moyen de trois parois de séparation (13), en deux zones de taille égale, comme chacune des zones du plateau de touraille rotatif (8) et en une zone, recouvrant cinq des zones du plateau de touraille rotatif (8).

7. Installation selon la revendication 6, caractérisée en ce que
- les deux zones de taille égale forment la zone de séchage à l'air (6) et la zone de coup de feu (7).

8. Installation selon l'une des revendications 1 à 7, caractérisée en ce que
- un dispositif de retournement (18) est susceptible d'être inséré au moins dans les zones de germination (1 à 5).

9. Installation selon l'une des revendications 1 à 8, caractérisée en ce que
- la zone de coup de feu (7) est pourvue d'un dispositif de vidage (19).

10. Installation selon l'une des revendications 1 à 9, caractérisée en ce que
- le plateau de touraille rotatif (8) est susceptible de tourner au moyen d'un entraînement, en moins d'une heure, de la valeur d'une zone (1 à 7).
